Europäisches Patentamt

European Patent Office

Office européen des brevets

(11) Publication number: **0 165 213**
**B1**

(12) **EUROPEAN PATENT SPECIFICATION**

(45) Date of publication of patent specification: **09.11.88**

(21) Application number: **85830120.3**

(22) Date of filing: **20.05.85**

(51) Int. Cl.⁴: **G 01 N 25/18**

(54) Process and device for the non-destructive test of a joint between sheets made by electric spot welding.

(30) Priority: **24.05.84 IT 6752684**

(43) Date of publication of application:
**18.12.85 Bulletin 85/51**

(45) Publication of the grant of the patent:
**09.11.88 Bulletin 88/45**

(84) Designated Contracting States:
**DE FR GB SE**

(56) References cited:
**FR-A-2 175 258**
**FR-A-2 413 647**
**GB-A-1 176 136**
**GB-A-1 593 425**
**US-A-2 386 319**
**US-A-3 555 879**
**US-A-4 027 524**
**US-A-4 259 859**

(73) Proprietor: **FIAT AUTO S.p.A.**
**Corso Giovanni Agnelli 200**
**I-10135 Torino (IT)**

(72) Inventor: **Palazzetti, Mario**
**Via Don Luigi Balbiano 14/A**
**I-10051 - Avigliana (IT)**
Inventor: **Re Fiorentin, Stefano**
**Corso Adriatico 347/4/E**
**I-10095 - Grugliasco (IT)**
Inventor: **Tufano, Giovanni**
**Via Ivrea 14**
**I-10096 - Rivoli (IT)**

(74) Representative: **Notaro, Giancarlo et al**
**c/o Jacobacci-Casetta & Perani S.p.A. Via Alfieri, 17**
**I-10121 Torino (IT)**

## Description

The present invention relates to a process and a device for the non-destructive test of a joint obtained by electric spot welding of two sheets of a metal material joined together in a local zone with the formation of a core.

Particularly the present invention relates to a process and a device for the non-destructive measure of the thickness of the welding core.

At present, devices are known which permit to effect non-destructive measures of the welding quality; the most known among them are based on ultrasonic measures and generally comprise an ultrasound generator and means detecting the ultrasonic return signal.

During the use, the ultrasound generator is placed near the test piece which is to be examined, so that its waves pass through it and coming back they supply to the detector a signal delayed in proportion to the thickness they passed through.

So, in the specific case, if between the two pieces the joint has not formed a core, the ultrasounds will come back as soon as the waves find the air between the two pieces. If, on the contrary, there is no air between the two pieces, the detector will receive a signal confirming the welding took place.

The above specified devices, however, even if widely used, are unsuitable for measuring the core thickness.

In fact devices of this type simply show if between the tested sheets there is a discontinuity, but they do not show if there has been a core formation or a simple bonding.

Furthermore the use of these devices is difficult in a factory, as they are bulky and the information is not sufficiently clear.

It is known that whenever the surface of a metallic object contacts a source of heat, the radiation is partly absorbed and partly diffused by the object. The absorbed radiation causes a gradual heating of the whole object, due to the thermal diffusivity of the material.

There are devices able to determine the thermal diffusivity in a homogeneous metallic piece, so that the thermal diffusivity measures can characterize metallic materials whose composition is unknown.

The main concept of the present invention is represented by the fact that the core between the two electrically spot welded sheets, being constituted by melted and then again solidified material, presents a structure having physical characteristics substantially different from the characteristics of the initial material and particularly the thermal diffusivity of the core differs from the thermal diffusivity of the initial material.

The different structure of the core can also be detected by other parameters which can be measured only destructing the welded piece.

Laboratory researches and tests have shown that, knowing the thermal diffusivity of the core and of the initial material, it is possible to test the welding in a non-destructive way. A thermal testing probe is also known (see US—A—3,555,879) which can be used to obtain a rough indication on whether the quality of a weld joint is high or low.

Purpose of the present invention is to realize a process to effect a non-destructive test of a joint obtained by electric spot welding of two sheets of a metal material joined together in a local zone with the formation of a core (18), as indicated in the appended claim 1.

This purpose is realized by a device (17) particularly fitted to measure in a non-destructive way a joint obtained by electric spot welding of two metallic sheets (1) and (2), substantially of the same type, joined together in a local zone with the formation of a core (18), the structure of said core having a thermal diffusivity substantially different from the thermal diffusivity of the initial material, said device being characterized in that it comprises:

a source of heat (9) and an electrode (11) forming a thermoelectric couple with the sheet, fitted to be placed on two conveniently chosen points on the surface of one of the metallic welded pieces (1) and (2) or on the surface of both of them:

a feeder (7) for said source of heat;

a detector (8) of the thermal signal coming from the electrode (11);

an amplifier (13) of the signal coming from the detector (8);

an A/D converter sending to the computer (16) the duly converted signal;

a computer (16) processing the signal and showing the value of the thickness of the core.

This invention will be better understood with an example of two preferred embodiments referred to the accompanying drawings, in which:

Fig. 1 schematically shows a device for the test of lhe welding quality, realized according to the present invention;

Fig. 2 shows a variation of the device for the test illustrated in Fig. 1;

Fig. 3 shows a detail of Figures 1 and 2;

Fig. 4 schematically shows a device to measure the diffusivity on a test piece made of homogeneous material.

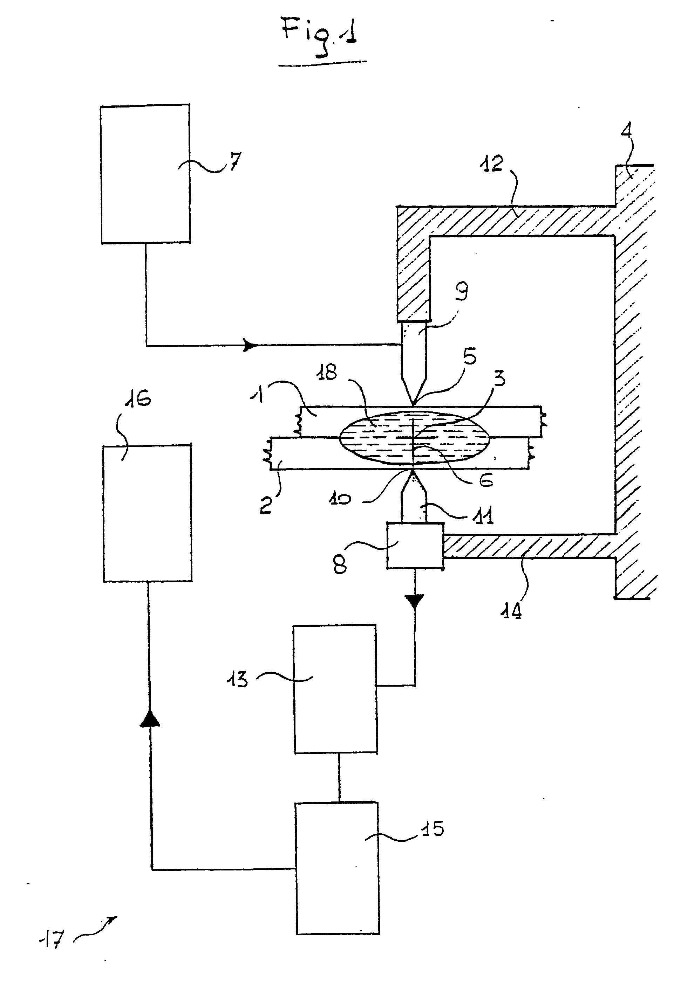

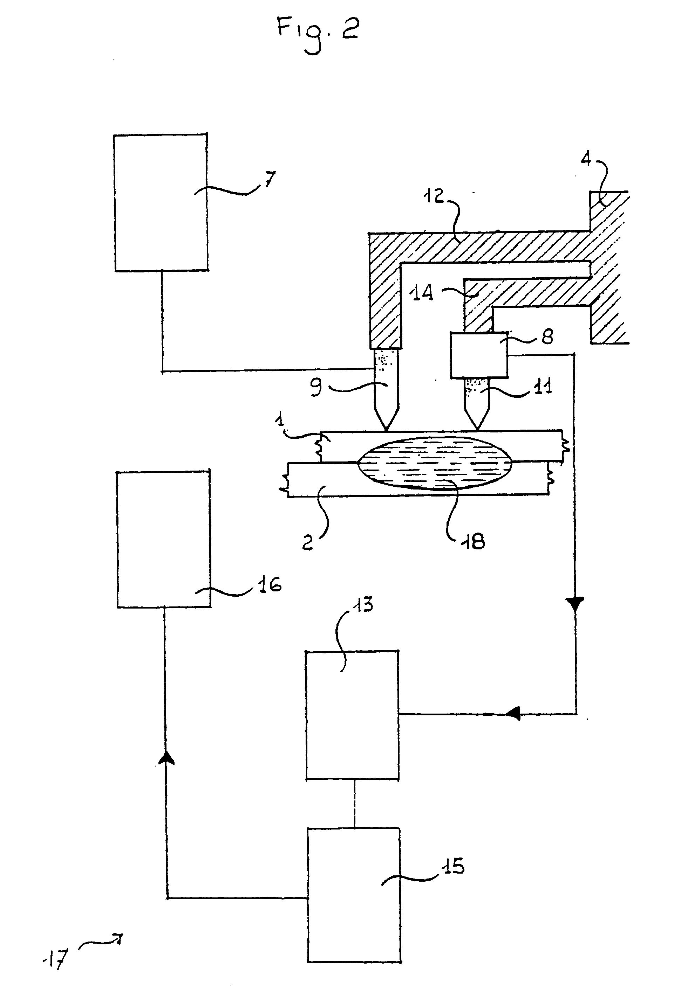

In the following description, referring to the accompanying drawings, the same elements have the same reference number. In the example of Figure 1 and 2 it is described a device (17) for the non-destructive test of a joint obtained by electric spot welding of two metallic pieces (1) and (2) joined

**0 165 213**

together in a local zone with the formation of a core (18), the structure of said core having a thermal diffusivity substantially different from the thermal diffusivity of the initial material, a result which is obtained only when the welding is of a good quality.

The main characteristic of the device (17) is to comprise an electrode (9) able to supply point (5) with a determined quantity of heat in a very short time and a detector (8) able to be placed on two conveniently chosen points on the surface of the two welded sheets (1) and (2). Particularly in Fig. 1, the electrode (9) is positioned on point (5) where the sheet (1) crosses the line (6) perpendicularly to the surface of the sheets (1) and (2), this line (6) passing through the center (3) of the core (18).

In Fig. 1, the electrode (11) is on the point (10) of the sheet (2) and opposite to the point (5).

In Fig. 2, the electrode (9) and the electrode (11) are positioned on the surface of only one (1) of the two sheets.

A generator (7) feeds the electrode (9) and an amplifier (13) sends the signal to the converter (15).

The electrode (9) and the amplifier (13) are earthed by two cables not illustrated in the figure; the input of the detector (8) is connected with the amplifier (13) which sends a signal corresponding to the rise in temperature to the A/D converter (15) which converts said signal and sends it to the computer (16) which will process said signal and will supply a value depending on the material diffusivity.

The electrode (9) and the detector (8) are supported, for example, by two arms (12) and (14) of the support (4).

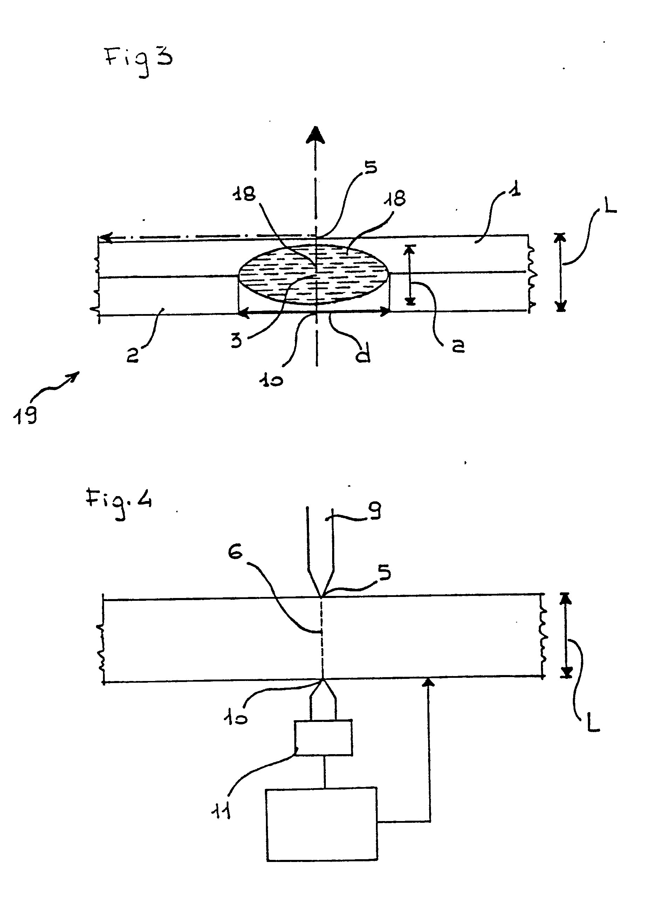

The working of the device (17) is at first explained from a theoretical point of view, referring particularly to Figures 3 and 4.

With reference to Fig. 3, with numeral (19) it is indicated a test piece constituted by two sheets (1) and (2) joined together by melting a local zone (18) called thickness core "a", extending longitudinally for a length "d", constituted by the material in which a structure variation took place and the heat transmission occurs in a different way with respect to the original material.

With "L" it is indicated the distance between the two points (5) and (10) placed on the line (6) perpendicularly to the surface of the sheets (1) and (2) and passing through the center (3) of the core (18).

With reference to Fig. 4, the rise in temperature caused in the point (5) by the electrode (9) is measured in the point (10) by the electrode (11).

The heat transmission from the point (5) of the test piece is described by an equation giving the temperatures in every point and in every instant when are known; the thickness of the sheet L, the thermal diffusivity of the material $\alpha$; the heat quantity in the point (5) q; the thermal conductivity K of the material; the temperature T of the sheets (1) and (2) before heating of the point (5) by the electrode (9); the time t measured from the instant of the beginning of heating.

With reference to Fig. 3, with r and z the coordinates respectively radial and axial, the above mentioned law is:

$$T_{(r,z,t)} = T_0 + \frac{q}{4\pi KLT} \cdot e^{-r^2/4\alpha t} \times [1 + 2 \sum_{n=1}^{\infty} \cos(\frac{n\pi Z}{L}) \cdot e^{-n^2\pi^2\alpha t/L^2}] \qquad (A)$$

This law can be used to get the thermal diffusivity, comparing the graph of this function with the measured temperature values.

If Cp is the specific heat and:

$$\theta = (T - T_0) \times \frac{\rho C p L^3}{q};$$

$$\tau = \frac{\alpha t}{L^2};$$

$$\zeta = \frac{Z}{L};$$

$$\rho = \frac{r}{L}.$$

Then A becomes:

$$\theta(\rho,\zeta,\tau) = \frac{e^{-\rho^2/4\tau}}{4\pi\tau} \cdot [1 + 2 \sum_{n=1}^{\infty} \cos(n\pi\zeta)e^{-n^2\pi^2\tau}] \, .$$

3

Comparing this function with the experimental data it can be found the term α/L from which it can be deducted α.

The variables ρ and ζ are functions of the position of the electrode (11).

For example, when positioning the electrodes on opposite sides of the sheets, we have:

$$\rho=0; \quad \zeta=1 \rightarrow \theta(0,1,\tau) = \frac{1}{4\pi\tau} \times [1 + 2 \sum_{n=1}^{\infty} (-1)^n \cdot e^{-n^2\pi^2}]$$

On the contrary, when positioning the electrodes on the same side of the sheets, we have:

$$\rho \neq 0; \quad \zeta=0 \rightarrow \theta(\rho,0,\tau) = \frac{e^{-\rho^2/4\tau}}{4\pi\tau} [1 + 2 \sum_{n=1}^{\infty} e^{-n^2\pi^2\tau}]$$

Fig. 4 illustrates from a theoretical point of view the disposition adopted for a measure of heat diffusivity on a laboratory test piece made of homogeneous material.

Fig. 1 shows a device for the non-destructive test of the welding spot of two sheets (1) and (2) joined together by melting a local zone or a core (18), comprising a support structure (4) at the upper end of which (12) it is fixed a source of heat (6), fed by a generator (7).

This source, of a known type, can be constituted, according to the needs, by a xenon flash tube or by a solid state laser, or by an electron beam or similar heat generators or by an electrical discharge between an electrode and the surface of the test piece, so to constitute a thermal punctiform source in a point (5) of the sheet (1) on the line (6) perpendicularly to the surface of the sheets (1) and (2) and passing through the center (3) of the core (18).

In this case it is better to use a source of heat (or of thermal energy) which is punctiform, as the heat supplied by other means affects a very wide surface and the measure can be influenced by the local variations of the absorption power of the surface and so, to avoid this inconvenience, it would be necessary to screen the zone near the point (5) of the piece (1) with particular protections, and the use of the above mentioned device would be less advantageous.

On point (10) of the surface of the sheet (2) diametrically opposite to the support point (5) of the electrode (9) it is positioned an electrode (11) forming with the sheet (2) as thermoelectric couple.

The material of said electrode can be e.g. a sintered alloy of constantan and wolfram carbide or constantan and aluminium in which the ceramic part is a rigid support and the metal allows a high thermoelectric power.

This thermoelectric couple is formed between the sheet (2) and the electrode (11) which is connected to a detector (8) fixed at the lower end (14) of the support structure (4). The detector (8) through the electrode (11) records the rise in temperature caused by the heat of the electrode (9) through the two sheets (1) and (2) connected by the local zone (3).

The potential difference of the thermocouple is amplified by the amplifier (13) which is connected to the A/D converter (15) interfaced with the computer (16) where it is stored a comparative signal.

The computer (16), of a known type, is preferably a microprocessor and receives the signals coming from the A/D converter (15) duly processing them, so to get the value of the coefficient of thermal diffusivity of the core.

This value is compared with the value of the diffusivity of the initial material which is permanently stored in the computer (16) which is therefore able to receive the signals, to process them and to give the value of the thickness of the core.

In the example illustrated in Fig. 2 the electrode (11) is placed on the piece (1) on the same side on which the electrode (9) is positioned.

The electrode (9), the electrode (11), the detector (8), the amplifier (13), the A/D converter (15) and the computer (16) constitute in their whole a device (17) measuring the thickness of the core (18) which joins together the two sheets (1) and (2).

The advantages coming from what illustrated in Fig. 2 are evident, in fact it is not necessary to know the thickness of the two sheets joined together and it is possible by this way to have an instrument of a small size fitted to measure in a reliable way the quality of the welding spot.

### Claims

1. Process to effect a non-destructive test of a joint obtained by electric spot welding of two sheets (1) and (2) of a metal material joined together in a local zone with the formation of a core (18), the structure of said core having a thermal diffusivity substantially different from the thermal diffusivity of the initial material characterized in that it comprises following steps:

instantaneously heating a first point (5) placed on the outer surface of one of the two welded sheets;

0 165 213

measuring the rise in temperature on a second point (10) on the surface of one of the two welded sheets;

determining the value of the thermal diffusivity of said joint on the basis of the measured value of temperature at said second point; and

determining the thickness of said core on the basis of the determined value of the thermal diffusivity of said joint and the value of the thermal diffusivity of said metal material before welding.

2. Process according to claim 1, characterized in that the measure of the heat transmission is effected on the same side of the piece which has been heated.

3. Process according to claim 1, characterized in that the measure of the heat transmission is effected on a point positioned on the part diametrically opposite to the point which has been heated.

4. Device (17) for the realization of the process according to one of claims 1 to 3 for the non-destructive test of a joint obtained by electric spot welding of two metallic sheets (1) and (2), substantially of the same type joined together in a local zone with the formation of a core (18), the structure of said core having a thermal diffusivity substantially different from the thermal diffusivity of the initial material, said device being characterized in that it comprises:

a source of heat (9) and an electrode (11) forming a thermoelectric couple with the sheets, fitted to be placed on two conveniently chosen points on the surface of one of the metallic welded pieces (1) and (2) or on the surface of both of them;

a feeder (7) for said source of heat;

a detector (8) of the thermal signal coming from the electrode (11);

an amplifier (13) of the signal coming from the detector (8);

an A/D converter (15) sending to the computer (16) the duly converted signal;

a computer (16) processing the signal and showing the value of the core thickness.

5. Device according to claim 4, characterized in that the source of heat is punctiform.

6. Device according to claims 4 and 5, characterized in that the source of heat (9) and the electrode (11) are both placed on the surface of the same metallic piece.

7. Device according to claims 4 and 5, characterized in that the source of heat (9) and the electrode (11) are placed on sides diametrically opposite with respect to the two sheets (1) and (2) welded together.

8. Device according to one of claims 4 to 7, characterized in that the measuring system is constituted by a thermoelectric couple between the electrode (11) and the test piece itself.

9. Device according to one of claims 4 to 8, characterized in that the electrode (11) is constituted by a sintered alloy of constantan and wolfram carbide.

10. Device according to one of claims 4 to 8, characterized in that the electrode (11) is constituted by a sintered alloy of constantan and aluminium.

**Patentansprüche**

1. Verfahren zum zerstörungsfreien Prüfen einer Verbindung, die durch elektrisches Punktschweißen zweier Metallbleche (1 und 2) hergestellt ist, die in einer lokalen Zone unter Bildung eines Kerns (18) miteinander verbunden sind, wobei die Struktur des Kerns eine Wärmeleitfähigkeit hat, die von derjenigen des Ausgangsmaterials erheblich abweicht, gekennzeichnet durch folgende Verfahrensschritte:

momentanes Erwärmen eines auf der Außenfläche eines der beiden verschweißte Bleche liegenden ersten Punkts (5),

Messen der Temperaturerhöhung an einem an der Oberfläche eines der beiden verschweißten Bleche liegenden zweiten Punkt (10),

Ermitteln des Werts der Wärmeleitfähigkeit der Verbindung auf der Grundlage der an dem zweiten Punkt gemessenen Temperatur und

Ermitteln der Dicke des Kerns auf der Grundlage der ermittelten Wärmeleitfähigkeit der Verbindung und der Wärmeleitfähigkeit des metallischen Materials vor dem Schweissen.

2. Verfahren nach Anspruch 1, dadurch gekennzeichnet, daß die Messung der Wärmeleitung auf der derselben Seite des Teils durchgeführt wird, die auch erwärmt wurde.

3. Verfahren nach Anspruch 1, dadurch gekennzeichnet, daß die Messung der Wärmeleitung an einem Punkt durchgeführt wird, der dem Punkt, der erwärmt wurde, an dem Teil diametral entgegengesetzt ist.

4. Vorrichtung (17) zur Durchführung des Verfahren nach einem der Ansprüche 1 bis 3 zum zerstörungsfreien Prüfen einer Verbindung, die durch elektrisches Punktschweißen zweier Metallbleche (1 und 2) von im wesentlichen gleicher Art hergestellt ist, die in einer lokalen Zone unter Bildung eines Kerns (18) miteinander verbunden sind, wobei die Struktur des Kerns eine Wärmeleitfähigkeit hat, die von derjenigen des Ausgangsmaterials erheblich abweicht, gekennzeichnet durch

eine wärmequelle (9) und eine mit den Blechen ein thermoelektrisches Element bildende Elektrode (11), wobei diese Teile so angeordnet sind, daß sie an zwei geeignet ausgewählten Punkten an der Oberfläche eines der verschweißten Metallteile (1 und 2) oder in der Oberfläche beider Teile angeordnet werden können,

eine Speisevorrichtung (7) für die Wärmequelle,

einen Detektor (8) zur Erfassung des von der Elektrode (11) kommenden thermischen Signals,

5

einen Verstärker (13) für das von des Detektor (8) kommende Signal,

einen Analog/Digitalwandler (15) zur Aussendung eines in geeigneter Weise gewandelten Signals an einen Rechner (16) sowie

einen Rechner (16) zur Verarbeitung des Signals und zur Anzeige der Dicke des Kerns.

5. Vorrichtung nach Anspruch 4, dadurch gekennzeichnet, daß die Wärmequelle punktförmig ist.

6. Vorrichtung nach Anspruch 4 und 5, dadurch gekennzeichnet, daß die Wärmequelle (9) und die Elektrode (11) auf der Oberfläche desselben Metallteils angeordnet sind.

7. Vorrichtung nach Anspruch 4 und 5, dadurch gekennzeichnet, daß die Wärmequelle (9) und die Elektrode (11) an den beiden miteinander verschweißten Bleche (1 und 2) auf diametral entgegengesetzten Seiten angeordnet sind.

8. Vorrichtung nach einem der Ansprüche 4 bis 7, dadurch gekennzeichnet, daß das Meßsystem aus einem thermoelektrischen Element zwischen der Elektrodes (11) und dem Prüfling selbst besteht.

9. Vorrichtung nach einem der Ansprüche 4 bis 8, dadurch gekennzeichnet, daß die Elektrode (11) aus einer gesinterten Legierung aus Konstantan und Wolfram besteht.

10. Vorrichtung nach einem der Ansprüche 4 bis 8, dadurch gekennzeichnet, daß die Elektrode (11) aus einer gesinterten Legierung aus Konstantan und Aluminium besteht.

**Revendications**

1. Procédé d'exécution d'un contrôle non destructif d'un joint d'assemblage obtenu par soudure électrique par point de deux feuilles (1) et (2) en une matière métallique, assemblées l'une à l'autre dans une zone locale avec formation d'une âme (18), la structure de ladite âme ayant une diffusivité thermique sensiblement différente de la diffusivité thermique de la matière initiale, caractérisé en ce qu'il comporte les étapes suivantes:

un chauffe instantanément un premier point (5) placé sur la surrace extérieure de l'une des deux feuilles soudées;

on mesure la montée en température en un deuxième point (10) sur la surface de l'une des deux feuilles soudées;

on détermine la valeur de la diffusivité thermique dudit joint sur la base de la valeur mesurée de la température audit deuxième point; et

on détermine l'épaisseur de ladite âme sur la base de la valeur déterminée de la diffusivité thermique dudit joint et la valeur de la diffusivité thermique de ladite matière métallique avant soudure.

2. Procédé selon revendication 1, caractérisé en ce que la mesure de la transmission de chaleur est effectuée sur le même côté de la pièce, qui a été chauffé.

3. Procédé selon revendication 1, caractérisé en ce que la mesure de la transmission de chaleur est effectuée en un point disposé sur la partie diamétralement opposée au point qui a été chauffé.

4. Dispositif (17) pour la réalisation du procédé selon l'une des revendications 1 à 3, pour le contrôle non destructif d'un joint d'assemblage obtenu par soudure électrique par point de deux feuilles métalliques (1) et (2), sensiblement de même type, assemblées l'une à l'autre dans une zone locale avec formation d'une âme (16) dont la structure possède une diffusivité thermique sensiblement différente de la diffusivité thermique de la matière initiale, ce dispositif étant caractérisé en ce qu'il comprend:

une source de chaleur (9) et une électrode (11) formant un couple thermoélectrique avec les feuilles, aptes à être placées sur deux points convenablement choisis par la surface de l'une des pièces métalliques soudées (1) et (2), ou sur la surface de ces deux pièces;

un moyen d'alimentation (7) pour ladite source de chaleur;

un détecteur (8) du signal thermique provenant de l'électrode (11);

un amplificateur (13) du signal provenant du détecteur (8);

un convertisseur analogique/numérique (15) envoyant au calculateur (16) le signal dûment converti;

un calculateur (16) traitant le signal et montrant lu valeur de l'épaisseur de l'âme.

5. Dispositif selon revendication 4, caractérisé en ce que la source de chaleur est ponctuelle.

6. Dispositif selon revendications 4 et 5, caractérisé en ce que la source de chaleur (9) et l'électrode (11) sont toutes les deux placées sur la surface de la même pièce métallique.

7. Dispositif selon revendications 4 et 5, caractérisé en ce que la source de chaleur (9) et l'électrode (11) sont placées sur des faces diamétralement opposées en considérant les deux feuilles (1) et (2) soudées l'une à l'autre.

8. Dispositif selon l'une des revendications 4 à 7, caractérisé en ce que le système de mesure est constitué par un couple thermoélectrique entre l'électrode (11) et la pièce contrôlée proprement dite.

9. Dipositif selon l'une des revendications 4 à 8, caractérisé en ce que l'électrode (11) est constituée par un alliage fritté de carbure de tungstène et constantan.

10. Dispositif selon l'une des revendications 4 à 8, caractérisé en ce que l'électrode (11) est constituée par un alliage fritté d'aluminium et de constantan.

# Fig.1

# Fig. 2

Fig 3

Fig. 4